# EUROPEAN PATENT APPLICATION

(11) **EP 4 787 147 A1**
(43) Date of publication of application: **05.08.2026**
(21) Application number: 25155864.9
(22) Date of filing: 04.02.2025
(51) Int. Cl.: G06F 7/544

(54) **SCALABLE ARRAY ARITHMETIC OPERATION CIRCUITRY**

(71) Applicant: Rhim, Elias Seon-Young, 12459 Berlin (DE); Heyl, Max Johann, 13189 Berlin (DE)
(72) Inventor: Rhim, Elias Seon-Young, 12459 Berlin (DE)
(74) Representative: Gulde & Partner

(57) **Abstract**

The present disclosure provides systems, devices, and methods for array arithmetic operations, including multiplication circuitry block including a multiplying digital to analog converter, MDAC, module comprising one or more MDACs, each of the MDACs is configured to obtain two digital inputs and provides an analog output corresponding to a multiplication result of the two digital inputs, and the MDAC module is configured to obtain a plurality of pairs of two digital inputs and provide a plurality of analog outputs corresponding to multiplication values of a plurality of pairs, a charge coupled device, CCD, module including one or more CCDs, each CCD including a parallel input row configured to obtain the analog outputs from the MDAC module, wherein the number of inputs in the parallel input row corresponds to the number of analog outputs from the MDAC module, one or more intermediary rows, wherein the CCD is configured to propagate the analog inputs along the intermediary rows of the CCD for performing an addition operation of propagated analog inputs, and a parallel terminal row configured to accumulate propagated signals from the preceding intermediary rows and provide parallel analog outputs indicative of an accumulation of the propagated signals from the preceding intermediary rows. The block also includes a common output module configured to obtain the parallel analog outputs from the parallel terminal row and perform an addition operation on the obtained parallel analog outputs and provide an output analog signal indicative of the addition calculation of all the parallel analog outputs from the parallel terminal row.

## Description

### Field of the Invention

The invention pertains to the field of electronic devices and circuitry for performing array arithmetic operations.

### Technological Background

Matrix multiplication serves as a cornerstone in various computational applications, especially within the realm of artificial intelligence (Al). Neural networks, which underpin most AI systems, depend extensively on matrix multiplication for processes like forward propagation, backpropagation, and weight updates during training. The performance and scalability of AI systems are heavily influenced by the efficiency of these operations, positioning matrix multiplication as a pivotal area for both hardware and software innovation.

The accelerated expansion of AI applications in fields such as natural language processing, computer vision, and autonomous systems has created a significant demand for computational resources. Large-scale matrix multiplication, a key component of these operations, constitutes a large portion of the computational load. Consequently, hardware solutions like GPUs and TPUs are equipped with specialized capabilities to manage these tasks. However, as AI models grow in size and complexity, these solutions frequently encounter limitations related to speed, energy consumption, and scalability.

Optimizing matrix multiplication is also important for edge computing and mobile AI applications, where computational power and energy are inherently constrained. The ability to perform rapid matrix multiplication with low energy usage is critical for enabling real-time inference and processing. This is especially relevant in applications such as autonomous vehicles, smart devices, and loT systems, where efficiency and minimal latency are essential requirements.

While progress has been made, there is still a need to enhance the efficiency and scalability of matrix multiplication. Challenges such as energy consumption and hardware constraints highlight the need for new solutions in matrix multiplication.

### Description of Invention

While specialized hardware devices have been developed to enhance the speed and efficiency of matrix multiplication, such as graphic processing units and tensor processing units, there remains a need for improved solutions that offer increased computational speed, efficiency, and enhanced functionality for array operations, particularly matrix multiplication

According to some embodiments, there is provided a multiplication circuitry block including: a multiplying digital to analog converter, MDAC, module including one or more MDACs, each of the MDACs is configured to obtain two digital inputs and provides an analog output corresponding to a multiplication result of the two digital inputs, and the MDAC module is configured to obtain a plurality of pairs of two digital inputs and provide a plurality of analog outputs corresponding to multiplication values of a plurality of pairs. The block includes a charge coupled device, CCD, module including one or more CDDs, each of the CCDs with a parallel input row is configured to obtain the analog outputs from the MDACs of the MDAC module, wherein the number of inputs in the parallel input row corresponds to the number of analog outputs from the MDAC module, one or more intermediary rows, wherein the CCD is configured to propagate the analog inputs along the intermediary rows of the CCD for performing an addition operation of propagated analog inputs, and a parallel terminal row configured to accumulate propagated signals from the preceding intermediary rows and provide parallel analog outputs indicative of an accumulation of the propagated signals from the preceding intermediary rows. The block further includes a common output module configured to obtain the parallel analog outputs from the parallel terminal row and perform an addition operation on the obtained parallel analog outputs and provide an output analog signal indicative of the addition calculation of all the parallel analog outputs from the parallel terminal row.

As used herein, the term "multiplying digital to analog converter" or "MDAC" refers to an integrated or discrete module circuit or sub-block, either forming a monolithic unit with preceding and following functional blocks or integrated in a heterogeneous functional system, that can receive two digital input values (such as floating-point or integer data (signed or unsigned) or any binary data type) and produce an analog output that is equal, proportional, or corresponding to the product of these input values.

While reference to MDACs is done herein to signify a multiplying and digital to analog conversion operation, this term is interchangeably used with circuitries that obtain two digital inputs and produce an analog output that is equal, proportional, or corresponding to the arithmetic or logic functions applied to the two digital inputs.

While MDAC circuitries here are described as circuitries that obtain two digital inputs and produce one analog output, this example is brought for simplicity and clarity purposes, and other combinations of multiple inputs to a single output or multiple inputs to multiple outputs are applicable.

As used herein, the term "charge coupled device" or "CCD" refers to a structure for capturing and moving values, such as electric charges within a semiconductor, such as silicon. In the context of array multiplication, each CCD cell or well may store charge proportional to a partial product or arithmetic or logic operation; when charges are shifted or transferred through intermediary rows, they effectively perform analog summation of those partial products.

As used herein, the term "length" regarding CCD refers to the number of the inputs of the CCD.

As used herein, the term "CCD module" refers to an array of one or more such CCDs.

As used herein, the terms "matrix" and "array" are interchangeable and refer to numerical data structure ranging from a single cell or value, to a one-dimensional vector, to a two-dimensional matrix, to an N-dimensional matrix, or to any tensor objects with arbitrary dimensions for both symmetric and asymmetric. Wherein the size of the array in each of the dimensions may be 0, 1, 2, or any larger integer.

As used herein, the term "common output module" refers to an output summation or combining circuit, often near the final CCD row, that aggregates the accumulated values, such as charges (or voltages) into one analog output signal. This module may include a multiplexer and may interface directly or indirectly with an analog to digital converter (ADC), comparator, or other circuitry to produce a final digital or analog result.

Advantageously, combining MDAC-based multiplication with CCD-based addition enables a highly parallel analog multiply-and-accumulate (MAC) scheme as the CCD is configured to obtain multiple inputs in the input row and operate on them in parallel. This parallels the architecture of the block and circuitry for array multiplication, where, according to some examples, the CCD may act as analog accumulators, thereby reducing digital overhead and power consumption in large-scale matrix computations, while facilitating parallel operation and scalability.

Advantageously, this architecture may enable hybrid AI accelerators, as it addresses the von Neumann bottleneck by integrating analog operations within the chip, thereby improving throughput for ANN training or inference.

According to some embodiments, the intermediary rows may be shifted at typical CCD clock rates ranging from KHz, MHz, GHz, or more, corresponding to the implementing technology of the CCD.

According to some embodiments, the output of the MDAC may be provided directly into the CCD's semiconductor bulk via an input diode, injecting charges corresponding to the analog product signals.

According to some embodiments, the MDAC module includes either: a number of MDACs equal to the number of inputs in the parallel input row, such that each MDAC is associated with one input in the parallel input row, or a number of MDACs smaller than the number of inputs in the parallel input row and a block switching module configured to selectively associate one or more of the MDACs to one or more of the inputs in the parallel input row.

As used herein, the term "block switching module" refers to a configurable network of switches or multiplexers that controllably routes the outputs of a smaller set of MDACs to a larger set of CCD input nodes. This can be based on time-division multiplexing or selective gating.

According to an example, if there are 64 parallel input row cells, a design might include 64 MDACs. Such a design is suitable for high-end AI accelerators.

Commonly the MDACs operate at faster speeds than CCDs, allowing an MDAC to provide inputs to multiple CCD inputs without slowing the overall operation. This inter alia may be exploited to address a large number of inputs of a CCD module enhancing the parallelism without interrupting the data stream. For example, if the propagation time in each row of the CCD(s) is double the operation time of an MDAC, one MDAC may be used to selectively feed two inputs of the CCD module.

Advantageously, using fewer MDACs than parallel inputs can reduce components count and thus reduce manufacturing cost and fit within physical constraints of a block or a system in which the block is implemented, while retaining the ability to drive all CCD inputs by sequencing or multiplexing signals.

According to an example, a set of 16 MDACs may be used for 64 CCD inputs in 4 sequential steps based on MDAC clock speed.

According to some embodiments, an MDAC clock, a CCD clock, and a common output module clock may operate are corresponding clock speeds, for example, equal clock speeds, or clock speeds that are multiples of one another. For example, an MDAC clock may be 2 times, 3 times, 4 time, or more, faster than a CCD block, which can be achieved by clock frequency dividers, such as Phase-locked loop frequency synthesizers. Advantageously, using corresponding clocks or corresponding clock speeds may facilitate synchronized operation of the various components while not significantly increasing the design complexity.

According to some embodiments, the block further includes an analog to digital converter configured to obtain from the common output module the analog output signal, indicative of the addition calculation of all the parallel analog outputs from the parallel terminal row, and convert it to a digital output signal.

As used herein, the term "analog to digital converter" or "ADC" refers to a circuit such as a flash ADC, SAR ADC, pipeline ADC, sigma-delta ADC, or arbitrary combinations of these that transforms the single analog sum signal into a digital signal or code.

Commonly, the ADCs operate at faster speeds than CCDs, partial or "streaming" computation, such that new data can be accumulated in the terminal row while previous results in the common output are being read out or converted by the ADC, advantageously improving the utilization of components without impeding the parallel operation or throughput of the device or block.

Advantageously, this approach facilitates handling large partial sums, since the CCD accumulates multiple charges, then the final aggregated value is digitized.

According to an example, an ADC may be selected based on system requirements, such as an ADC having clock rates ranging from 1 KHz to 1GHz, or more. According to some embodiments, the ADC selection may be achieved using a multiplexer.

According to an example, the bit resolution of the ADC is 4 bits, 8 bits, 16 bits, or more, corresponding to precision requirements of the arithmetic array operation.

According to some embodiments, the block further includes an output memory interface module configured to receive the digital output signal from the analog to digital converter and allocate the digital output signal to a memory element. According to some embodiments, the memory element is an array or a cell within an array as a data structure in the memory, either physically or virtually structured.

As used herein, the term "memory interface module" refers to an on-chip hardware or circuitry that may be configured to handle address generation, data buffering, and timing control to store the digitized results into on- or off-chip memory, such as DRAM, SRAM, or register files.

Advantageously, the output memory interface module allows seamless integration with system-level memory subsystems for large-scale AI tasks.

According to an example, the memory interface is a DDR3, DDR4, DDR5, or PCIe interface such as PCIe 5.0 interface. According to an example, the memory interface is configured for transferring outputs at 1 GB/s, 10 GB/s, 128 GB/s, 1TB/s, or more.

According to an example, the memory may be an on-chip SRAM or external DRAM (e.g., HBM, GDDR6, etc.).

According to some embodiments, the CCD module includes a positive CCD configured to perform operations corresponding to positive products and a negative CCD configured to perform operations corresponding to negative products, and the block further includes a combining module configured to generate a combined output based on an output of the positive CCD and/or an output of the negative CCD.

As used herein, the term "positive CCD" refers to a CCD dedicated to storing charge packets that represent positive products or partial products. As used herein, the term "negative CCD" refers to a CCD dedicated to storing charges that represent negative products or partial products. According to some embodiments, the sign bits from the two operands determine whether the product is directed to the negative or to the positive CCD.

As used herein, the "combining module" refers to a circuitry configured to obtain an output from the positive CCD common output and an analog output of the negative CCD common output, wherein referring to an analog circuitry is configured to obtain analog outputs providing combined analog output. As used herein, the term "positive CCD common output" refers to an output summation or combining circuit, often near the final positive CCD row, that aggregates the accumulated values corresponding to positive values, such as charges (or voltages) into one analog output signal. As used herein, the term "negative CCD common output" refers to an output summation or combining circuit, often near the final negative CCD row, that aggregates the accumulated negative values corresponding to negative values, such as charges (or voltages) into one analog output signal.

As used herein, the term "analog circuitry" includes analog electronic components, such as amplifier or difference amplifier stage or any circuitry that merges or subtracts signals from the positive and negative CCD common outputs, producing one analog output.

Advantageously, separating positive and negative accumulation facilitates the usage of CCDs for negative and positive operations, where otherwise a single CCD is not able to handle positive and negative partial products due to the charge accumulation mechanism of operation of the CCD.

According to some embodiments, the "p" (positive) and "n" (negative) CCD may have equal lengths.

According to some embodiments, the block further includes a block switching module configured to route analog output of the MDACs to CCDs, for example, either the positive CCD or the negative CCD based on the sign values of the two digital inputs.

As used herein, the term "block switching module" refers to logic gates (e.g., XOR, XNOR) and/or analog switches that connect the MDAC's analog output to either the positive or negative CCD, depending on whether the multiplication result is signed positive or negative.

Advantageously, automatic sign-based routing eliminates the need for post-processing steps in the digital domain to correct sign bits, reducing computational overhead.

According to an example, sign bits of a first number and a second number pass through XOR or XNOR gates to determine the sign of the product. If the result is negative, the outcome of the MDAC is routed to the negative CCD, otherwise, the outcome of the MDAC is routed to the positive CCD. Advantageously, routing the MDAC outcome to either the positive CCD or the negative CCD may reduce the computational workload associated with combining the results from the positive CCD and negative CCD.

According to some embodiments the combining module provides to the analog to digital converter an analog signal obtained by combining the analog output of the positive CCD common output and the analog output of the negative CCD common output.

Advantageously, immediate analog combining requires at most one ADC (by multiplexing regarding a scenario with multiple combining modules), which can reduce chip area and complexity. Further advantageously, this architecture can handle negative or positive sums without separate digital logic for sign handling.

According to some embodiments the analog to digital conversion step comprises a positive analog to digital converter configured to obtain the analog value of the positive CCD common output and convert it to a positive digital output of the positive CCD and a negative analog to digital converter configured to obtain the analog value of the negative CCD common output and convert it to a negative digital output of the negative CCD, and wherein the combining module includes a digital arithmetic logic module configured to combine the positive digital output and the negative digital output.

As used herein, the term "positive analog to digital converter" refers to an ADC dedicated to converting the positive CCD's output into a digital code. As used herein, the term "negative analog to digital converter" refers to an ADC dedicated to converting the negative CCD's output into a digital code. As used herein, the term "digital arithmetic logic module" refers to a hardware ALU that takes two digital inputs (positive and negative partial sums) and performs an arithmetic combination (e.g., an adder or subtractor) to produce the final digital result.

Advantageously, separate ADCs for positive and negative CCDs can handle larger dynamic ranges more easily, mitigating noise or resolution constraints in the analog domain. Further advantageously, using a digital ALU to combine partial sums may facilitate straightforward integration with floating-point or integer pipelines.

According to some embodiments, the parallel terminal row is configured to accumulate propagated signals by collecting and storing charges obtained from preceding intermediary rows.

As used herein, the term "accumulate propagated signals" refers to the storage and summation of charge from multiple prior stages (rows) within the CCD array, leading to a final set of charge packets in the terminal row.

Advantageously, each "terminal row" cell can hold the sum of many partial products, eliminating the need for repeated digital summation.

According to some embodiments, the block further includes a block allocation module configured to obtain two input arrays, A and B, wherein the number of elements in an array dimension of A corresponds to the number of elements in an array dimension of B, and to provide pairs or elements comprising one element from A and one element of B to the MDAC module.

As used herein, the term "block allocation module" refers to the scheduling or control logic that pairs corresponding elements (e.g., elements within row of A, column of B) to be fed into the MDAC module for dot-product or matrix multiplication operations.

Advantageously, an on-chip block allocation module reduces external CPU overhead in distributing matrix data. Advantageously, the block allocation module facilitates seamless integration of the block or device in various systems irrespective of the sizes of arrays. Further advantageously, the block allocation module ensures correct pairing of data elements for large-scale matrix computations, an essential step in typical neural network layers.

According to some embodiments, when the number of elements in an array dimension of A or B is larger than the number of input pairs in the MDAC module, the block allocation module is configured to provide batches of pairs to the MDAC module corresponding to the number of pairs of inputs in the MDAC module, and the terminal row of the CCD is configured to accumulate one or more products of multiplying pairs corresponding to the number of batches of pairs provided to the MDAC module and to the length of the CCD.

As used herein, the term "batches of pairs" refers to dividing a large set of element pairs into smaller groups that match the parallel capacity of the MDAC module.

Advantageously, batching facilitates performing operations on large array dimensions based on the parallel capacity of the block or device.

Advantageously, partial sums may be retained in the CCD without reinitializing after each batch, enabling the final result to be obtained after multiple injection/shift cycles.

For example, If the MDAC module supports 32 pairs, and a dimension of the array is 128, four consecutive batches (each with 32 pairs) will fully compute the dot product. The CCD terminal row accumulates partial sums across these batches.

According to some examples, after each batch injection, the CCD can shift charges within intermediary rows, eventually combining them in the terminal row.

According to some embodiments, there is provided an array arithmetic operation device including a plurality of blocks.

As used herein, the term "array arithmetic operation device" may refer to a higher-level module or chip architecture containing multiple multiplication-and-accumulation blocks (each block may include its own MDAC, CCD, and optional ADC sections).

Advantageously, multiple blocks allow for further parallelization and partitioning of large matrix multiplication tasks (tiling). Advantageously, such devices may scale with the number of blocks particularly for tasks like matrix-vector or matrix-matrix multiplication.

According to some embodiments, there is provided an array arithmetic operation device including: a multiplying digital to analog converter, MDAC, module including one or more MDACs, each of the MDACs is configured to obtain two digital inputs and provides an analog output corresponding to a multiplication result of the two digital inputs, and the MDAC module is configured to obtain a plurality of pairs of two digital inputs and provide a plurality of analog outputs corresponding to multiplication values of a plurality of pairs, and an array of one or more charge coupled device modules, CCD modules, wherein the total number of inputs in the parallel input row of the array corresponds to the summation of each CCD module parallel input row number. Wherein each CCD module includes: a parallel input row configured to obtain a plurality of analog outputs from the MDAC module, one or more intermediary rows, wherein the CCD module is configured to propagate the analog inputs along the intermediary rows of the CCD module for performing an addition operation of propagated analog inputs, and a parallel terminal row configured to accumulate propagated signals from the preceding intermediary rows and provide parallel analog outputs indicative of an accumulation of the propagated signals from the preceding intermediary rows, and a common output module configured to obtain the parallel analog outputs from the parallel terminal row and perform an addition operation on the obtained parallel analog outputs and provide an output analog signal indicative of the addition calculation of all the parallel analog outputs from the parallel terminal row, wherein the total number of inputs in the parallel input row of the CCDs relates to the number of analog outputs from the MDAC module,

As used herein, the term "array of one or more charge coupled device modules" refers to single or multiple CCD modules, each capable of performing local sums of multiple MDAC outputs. Each module may be addressed separately or in parallel for array computations. As used herein, the term "total number of inputs in the parallel input row of the array" refers to assembled number of inputs of the parallel input row of each CCD module obtaining a plurality of analog outputs from the MDAC module.

Advantageously, splitting the CCD domain into multiple modules enables distributing the MDACs output values to more analog parallel input rows reducing the injection/shift cycles and the value of the single partial sums. Further advantageously, multiple array multiplications can be concurrently performed in multiple CCD modules enabling tiling.

As used herein, the term "tiling" refers to a partitioning of the target array or algebraic objects ranging from a one-dimensional vector, to a two-dimensional matrix, to an N-dimensional matrix or to any tensor objects with arbitrary dimensions for both symmetric and asymmetric. By assigning a module to one element of an array or algebraic object since such an element is obtained by array multiplication.

According to an example, each CCD module might have 32 columns and 5 intermediary rows. If 4 such modules exist, the resulting total capacity is 128 columns in parallel.

According to some embodiments, the MDAC module in the arithmetic operation device includes either: a number of MDACs equal to the total number of inputs in the parallel input row of the array, such that each MDAC is associated with one input in the parallel input row of the array, or a number of MDACs smaller than total number of inputs in the parallel input row of the array and a block switching module configured to selectively associate one or more of the MDACs to one or more of the inputs in the parallel input row of the array of one or more CCD modules.

As used herein, the phrase "of one or more CCD modules" refers to the ability of the switching network to direct MDAC outputs across multiple CCD modules, not just within a single CCD's parallel row.

Advantageously, flexible routing to different CCD modules is particularly useful in advanced AI workloads, where certain partial sums might need to be channeled into specialized or distinct modules for summation. Further advantageously, this architecture accommodates varying array sizes by rerouting MDAC outputs to align with the desired parallel dimension in the CCD modules.

According to an example, a crossbar or multiplexer grid is provided that can map 16 MDAC outputs to any one of 4 CCD modules, each with 8 inputs, thereby supporting up to 32 parallel injection points at different times.

According to some embodiments, the control circuitry, sequencing the CCD shift propagation clock with MDAC operation clock, may cycle through which CCD module receives the MDAC outputs in each clock phase.

According to some embodiments, the array arithmetic operation device includes an array of common outputs in which each common output obtains the partial sums of each terminal row of each CCDs providing a plurality of analog local sums to an array of one or more ADCs or an array of one or more combining modules.

As used herein, the term "array of common outputs" refers to single or multiple common outputs obtaining analog values indicative of the partial sums retained in the terminal row of the CCDs in the array of one or more CCD modules to provide a plurality of analog values each indicative of the local sum of the dedicated CCD.

According to some embodiments, each CCD module of an array of one or more CCD modules includes positive and negative CCD.

As used herein, the term "array of one or more combining modules" refers to single or multiple combining modules obtaining a plurality of analog values from an array of positive common outputs and array of negative common outputs providing a plurality of combined outputs to an array of one or more ADCs.

As used herein, the term "array of positive common outputs" refers to a single or multiple common outputs obtaining analog values indicative of the partial sums retained in the terminal row of the positive CCDs in the array of one or more CCD modules to provide a plurality of analog values each indicative of the local sum of the dedicated positive CCD. As used herein, the term "array of negative common outputs" refers to a single or multiple common outputs obtaining analog values indicative of the partial sums retained in the terminal row of the negative CCDs in the array of one or more CCD modules to provide a plurality of analog values each indicative of the local sum of the dedicated negative CCD. As used herein, the term "array of one or more ADCs" refers to single or multiple ADCs obtaining a plurality of analog values from an array of common outputs, an array of positive and negative common outputs or from an array of combining module to provide a plurality of digital values indicative of each analog input values.

According to some embodiments, the device further includes: an input memory interface configured to obtain from a memory a set of input arrays for performing array arithmetic operations, and to provide the set of arrays to the MDAC module, in which each MDAC obtains element values from two arrays from the set of array and an output interface configured to obtain digital outputs from the array of one or more ADCs and arrange them as an output array.

As used herein, the term "input memory interface" refers to hardware or software or hybrid logic responsible for fetching blocks of data from local or external memory.

As used herein, the term "output interface" refers to a module that receives digitized results from an array of one or more ADCs and formats them into the final output array.

According to some embodiments, the output interface is configured to forward intermediary results of the arithmetic array operation to a processing circuitry configured to perform an arithmetic operation.

As used herein, the term "forward intermediary results" refers to partial and/or intermediary sums, local sums or/and intermediary products/results that are offloaded before a final complete multiplication result of the entire output array is formed.

Advantageously, sending intermediary results to external or on-chip processors enables advanced features like real-time activation functions, error correction, or partial re-injection for iterative algorithms. Advantageously, this can reduce latency and enable efficient utilization of resources as further operations do not need to wait for the entire output array for starting their respective operation.

According to some embodiments, the device further includes a device allocation module configured to obtain data from a set of input arrays from the input memory interface in one or more batches and allocates the batches to the MDAC module for performing arithmetic array operations between two input arrays.

As used herein, the term "device allocation module" refers to higher-level scheduling logic that divides large arrays or a large set of arrays in batches or tiles, consistent with the capacity of the MDAC/CCD modules, and coordinates the injection of these arrays into the hardware.

Advantageously, this module manages concurrency, ensuring that the device utilizes its capacity and is not bottlenecked by serial memory fetch latencies.

According to some embodiments, the device allocation module is configured to determine the size of each of the batches based on a dimension of the first input array and the second input array, the number of pairs of inputs in the MDAC module, or the number of columns in CCDs of the blocks.

Advantageously, this module manages multi-device processing, ensuring that multiple devices can work together to share the computational workload by separately providing the operands to another device performing of the consecutive calculation.

According to an example, if there are matrices A, B, and C, to calculate matrix D, which is a matrix resulting from a multiplication of matrix C and a matrix, which is the result of a multiplication from matrix A and B, the first device can calculate the multiplication of matrix A and B, while the second device can concurrently calculate matrix D with the frequently provided results from the first device, by feeding the MDACs with a sequenced set of array through the device allocation module.

Advantageously, this architecture provides scalability across a range of device configurations-from small, low-power edge accelerators to large HPC servers.

According to some embodiments, the device further includes a device switching module configured to obtain data from the MDAC module and controllably provide the data to CCD modules within the CCD array (array of one or more CCD modules).

Certain embodiments of the present disclosure may include some, all, or none of the above advantages. One or more technical advantages may be readily apparent to those skilled in the art from the figures, descriptions and claims included herein. Moreover, while specific advantages have been enumerated above, various embodiments may include all, some or none of the enumerated advantages.

In addition to the exemplary aspects and embodiments described above, further aspects and embodiments will become apparent by reference to the figures and by study of the following detailed descriptions.

### Brief Description of the Drawings

Examples illustrative of embodiments are described below with reference to figures attached hereto. In the figures, identical structures, elements or parts that appear in more than one figure are generally labeled with a same numeral in all the figures in which they appear. Alternatively, elements or parts that appear in more than one figure may be labeled with different numerals in the different figures in which they appear. Dimensions of components and features shown in the figures are generally chosen for convenience and clarity of presentation and are not necessarily shown in scale. The figures are listed below.
Fig. 1 schematically illustrates a block diagram of a multiplication circuitry block, according to some embodiments;
Fig. 2a, 2b, and 2c schematically illustrate block diagrams of MDAC module configurations, according to some embodiments;
Fig. 3a and 3b schematically illustrate block diagrams of a multiplication circuitry block with a positive CCD and a negative CCD, according to some embodiments;
Fig. 4a, 4b, and 4c schematically illustrates a block diagram of an array arithmetic operation device, according to some embodiments;
Fig. 5a and 5b schematically illustrate block diagrams different configurations of MDAC modules and CCD arrays, according to some embodiments;
Fig. 6 schematically illustrates an example of array multiplication using a multiplication circuitry block or an array arithmetic operation device, according to some embodiments;
Fig. 7a, 7b, and 7c schematically illustrate examples of array multiplication using MDAC module and multiple CCDs, according to some embodiments;
Fig. 8 schematically illustrates an example of a multi-stage array operation, according to some embodiments; and
Fig. 9a, 9b, and 9c schematically illustrate array multiplication schemes, according to some embodiments.

### Detailed Description of the Drawings

In the following description, various aspects of the disclosure will be described. For the purpose of explanation, specific configurations and details are set forth in order to provide a thorough understanding of the different aspects of the disclosure. However, it will also be apparent to one skilled in the art that the disclosure may be practiced without specific details being presented herein. Furthermore, well-known features may be omitted or simplified in order not to obscure the disclosure.

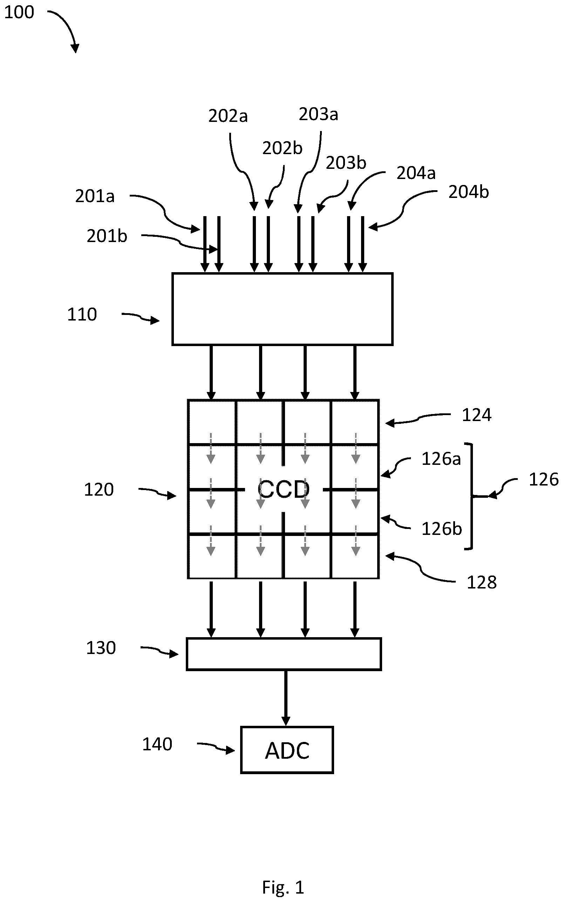

Reference is now made to Fig. 1, which schematically illustrates a block diagram of a multiplication circuitry block 100, according to some embodiments.

As used herein, the terms "array operation circuitry block" and "multiplication circuitry block" are interchangeable.

The multiplication circuitry block 100 includes an MDAC module 110, a CCD module 120, a common output module 130, and an analog to digital converter ADC 140. The illustrated arrangement shows how multiple input pairs-specifically first input pair 201a, 201b, second input pairs 202a, 202b, third input pairs 203a, 203b, and fourth input pairs 204a, 204b-are supplied to the MDAC module 110, thereby enabling a series of parallel multiplication operations to be carried out in an analog domain.

Each input pair 201a, 201b, 202a, 202b, 203a, 203b, and 204a, 204b may correspond, for example, to elements of two digital arrays to be multiplied. The MDAC module 110 processes these inputs (e.g., via one or more MDACs, not expressly shown) and generates analog signals representative of the respective products of the digital inputs.

Downstream, the analog signals exit the MDAC module 110 and enter the CCD module 120. The CCD module 120 includes a parallel input row 124, one or more intermediary rows 126, shown here as intermediary rows 126a, 126b, and a final or terminal row 128. During operation, the intermediary rows 126a, 126b propagate and shift charge packets through the CCD structure, effectively summing the analog products. This arrangement facilitates an analog accumulation of partial products in a highly parallel manner. Ultimately, the terminal row 128 gathers the accumulated charges, enabling efficient multiply-and-accumulate (MAC) functionality with minimal digital overhead.

A common output module 130 is connected to the CCD module 120 to receive the final analog sums. In some embodiments, the common output module 130 may include or operate alongside a combining module 134, which merges the results from multiple CCD cells or rows prior to conversion. Subsequently, the unified analog output is supplied to the analog to digital converter (ADC), 140. By performing only a single analog-to-digital conversion per summed output, the design advantageously conserves resources and reduces complexity compared to configurations that require continuous digital conversions at intermediate stages.

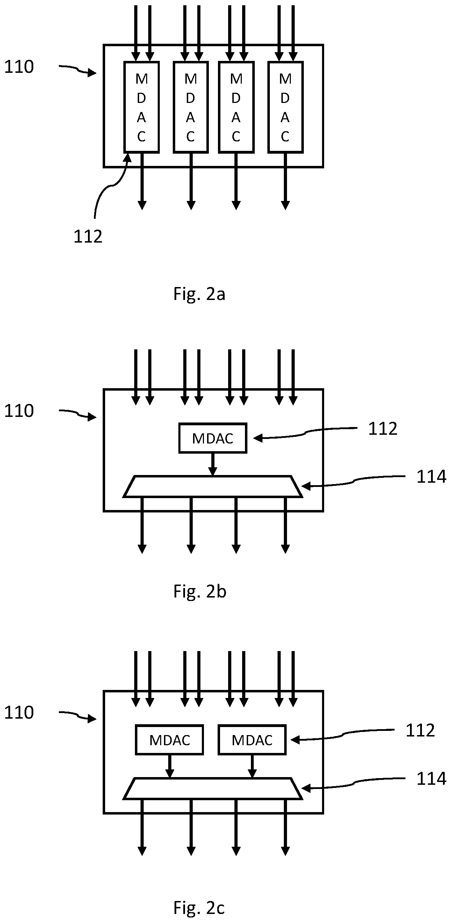

Reference is now made to Fig. 2a, 2b, and 2c, which schematically illustrate block diagrams of MDAC module 110 configurations, according to some embodiments. Each configuration facilitates the conversion of incoming digital data into analog signals via one or more MDACs 112, thereby enabling an efficient multiply-and-accumulate (MAC) process in the analog domain.

Referring first to Fig. 2a, MDAC module 110 includes multiple discrete MDACs 112 arranged in parallel. Each MDAC 112 receives a distinct pair of digital inputs from upstream components, such as an input memory interface or a device allocation module, and generates a corresponding analog product output. The parallel arrangement of MDACs 112 allows multiple pairs of digital values to be multiplied concurrently, thereby increasing throughput. In certain implementations, each MDAC 112 may handle exponent and mantissa bits for floating-point arithmetic or handle signed and unsigned integer operations. The parallel analog outputs from MDACs 112 can then be passed directly to a downstream CCD module, where summation or additional processing occurs.

Referring to Fig. 2b, MDAC module 110 includes a single MDAC 112 in conjunction with a block switching module 114. In this embodiment, block switching module 114 selectively routes successive pairs of digital inputs to MDAC 112 in a time-division or multiplexed manner. This approach permits MDAC module 110 to support multiple input channels using only one MDAC 112. Specifically, block switching module 114 sequentially connects each input pair to MDAC 112, which generates an analog output before reconfiguring to the next pair. The resulting analog signals can be temporarily buffered or directly transferred to the CCD module for accumulation. This configuration is advantageous when limited silicon area or power constraints dictate a smaller set of MDACs 112 while still allowing the system to handle large volumes of data over multiple cycles.

Reference is now made to Fig. 2c, which illustrates yet another configuration in which MDAC module 110 includes two or more MDACs 112 operating alongside block switching module 114. Here, block switching module 114 directs various incoming pairs of digital data to whichever MDAC 112 is ready to accept new inputs. This load-balancing mechanism optimizes throughput by distributing the multiplication tasks among multiple MDACs 112. In some embodiments, specific input pairs might be assigned to specific MDACs 112 based on data precision requirements, resource availability, or other scheduling criteria. The block switching module 114 thus ensures that each MDAC 112 is efficiently utilized, and the resulting analog products are rapidly transferred to the next stage of the processing pipeline, typically the CCD module.

In each of the configurations illustrated in Figs. 2a, 2b, and 2c, the flow of data begins with digital inputs, which may originate from on-chip or off-chip memory. These digital inputs pass through block switching module 114 (when present), are converted to analog form by one or more MDACs 112, and are subsequently directed toward a downstream accumulation or combining stage (e.g., a CCD module). This hierarchical design enables the system to handle wide-ranging arithmetic array operations, such as matrix multiplication, with minimal digital overhead and high parallelism.

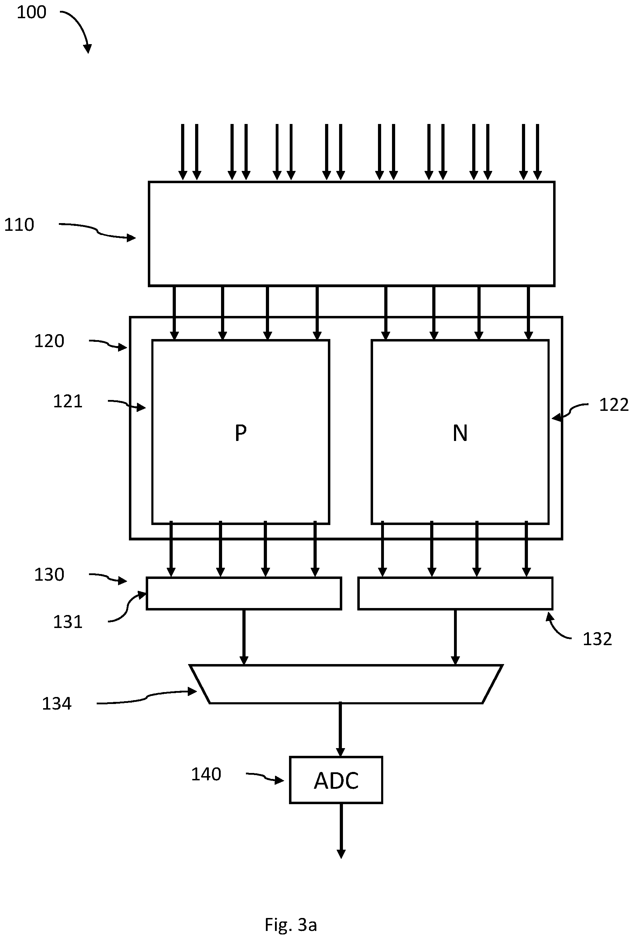

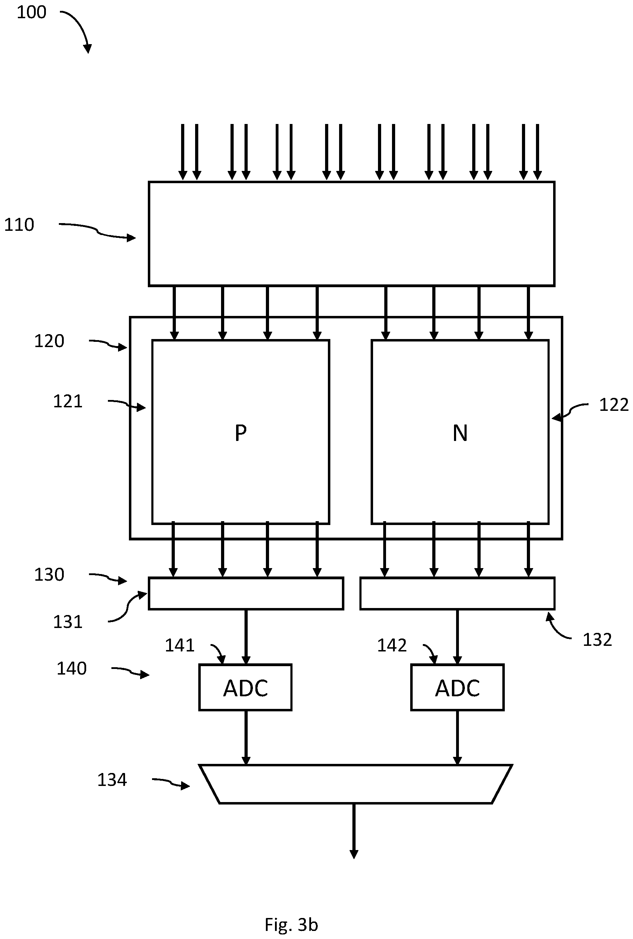

Reference is now made to Fig. 3a and 3b, which schematically illustrate block diagrams of a multiplication circuitry block 100 with a positive CCD 121 and a negative CCD 122, according to some embodiments.

Fig. 3a and 3b show a multiplication circuitry block 100 that includes an MDAC module 110, a CCD module 120, a combining module 134, a common output module 130, and an analog to digital converter 140. Within CCD module 120, a positive CCD 121 (labeled "P") and a negative CCD 122 (labeled "N") respectively accumulate charge packets corresponding to positive and negative partial products. This arrangement allows the system to handle signed multiplications in an analog domain without requiring the hardware to process bipolar charges in a single CCD array.

During operation, one or more MDACs in MDAC module 110 receive digital input pairs-such as pairs of vector elements-and generate an analog output representing the product of each pair.

For instance, when multiplying two vectors element by element (e.g., [2, -1, 3] × [4, 2, -5]), MDAC module 110 produces analog signals proportional to each product (8, -2, -15). Based on the sign of each product, a routing mechanism (implemented within or prior to MDAC module 110) directs positive products into positive CCD 121 and negative products into negative CCD 122.

As an example, the first elements 2 and 4 yield a positive product of 8. MDAC module 110 injects a charge representing +8 into positive CCD 121. Positive CCD 121, having a designated input row or injection node, stores this charge in a cell corresponding to that particular multiplication. If subsequent multiplications (e.g., from other pairs in a batched or tiled operation) also yield positive results.

For the second elements -1 and 2, the product is -2, which is steered to negative CCD 122. This separate array accumulates the negative charges. If more negative products (e.g., -15 from the third element pair 3 and -5) are produced, they are similarly placed into negative CCD 122.

Positive CCD 121 and negative CCD 122 each include rows or columns configured to propagate and combine charge along intermediary cells, ultimately arriving at a terminal cell where the total positive sum and total negative sum are held. This architecture enables the analog summation of many partial products in parallel. For example, if the multiplication of two vectors is divided across multiple input pairs (for instance, for a large-scale matrix-vector operation), the intermediate sums in positive CCD 121 and negative CCD 122 accumulate proportionally to the total positive and negative contributions, respectively.

Once the final partial sums are available in the respective arrays, combining module 134 merges the outputs of positive CCD 121 and negative CCD 122. In many scenarios, combining module 134 acts as an analog subtractor or adder that arrives at a net sum of positive and negative contributions. The single resulting analog value is then forwarded to the common output module 130, where it may be buffered or otherwise prepared for analog-to-digital conversion. Finally, analog to digital converter 140 digitizes this combined result, yielding a signed numerical output in digital form. Because the summation process occurs in the analog domain and only one final conversion is performed, the design conserves energy and reduces both latency and circuit complexity relative to an approach that digitizes each partial product individually.

By splitting positive and negative charges into distinct CCD arrays, the circuitry block 100 naturally handles positive and negative multiplications without added logic for sign extension or encoding within a single CCD. Multiple partial products can be processed and accumulated concurrently, lending itself to high-throughput multiply-and-accumulate operations (e.g., in neural network layers). Advantageously, only the final combined value is sent to ADC 140, which reduces the required number of analog-to-digital converters and the associated die area and power consumption. Whether used for small-scale vector multiplication examples (such as [2, -1, 3] × [4, 2, -5]) or extended to large matrix operations (via batching or tiling), the underlying mechanism of splitting positive and negative charges remains the similar, allowing scalable operations.

Thus, Fig. 3a and 3b exemplify how positive CCD 121 and negative CCD 122 within CCD module 120 cooperatively support signed arithmetic in an analog multiply-and-accumulate pipeline. By housing positive and negative results in separate arrays, the system can readily track the net sum of all partial products while maintaining the inherent advantages of analog summation.

Fig. 3a depicts a related embodiment of multiplication circuitry block 100, in which CCD module 120 still includes positive CCD 121 and negative CCD 122, but the downstream output stage is divided into a positive common output module 131 and a negative common output module 132, each receiving respective aggregated signals from positive CCD 121 and negative CCD 122. These common output modules 131 and 132 may include local summation or buffering elements that isolate positive and negative sums. The partial sums can then be forwarded to combining module 134, which merges the signals (e.g., by subtraction or differential summation) before supplying the composite analog output to ADC 140. This configuration can improve noise performance and dynamic range by permitting each CCD to operate at an optimal voltage or charge level. It further affords flexibility in processing flows, such as selectively reading only the positive or negative CCD when a particular application requires it.

Turning to Fig. 3b, multiplication circuitry block 100 again features positive CCD 121 and negative CCD 122 within CCD module 120, but in this embodiment, each CCD is coupled to a dedicated ADC. In particular, positive common output module 131 directs the analog sum from positive CCD 121 to positive ADC 141, while negative common output module 132 conveys the accumulated charge from negative CCD 122 to negative ADC 142. The separate digitization paths enable the system to handle higher dynamic ranges for positive and negative sums independently. Combining module 134 may receive the digital signals from ADCs 141 and 142 and thereafter reconcile them, for example by digital addition or subtraction, to yield a final result. Such a design may be advantageous for precision and performance speed.

Across all three embodiments, positive CCD 121 and negative CCD 122 cooperate to store and accumulate signed partial products from MDAC module 110. This split design approach enhances the ability of CCD-based architectures to handle negative values without the need for bipolar charge handling or additional on-chip sign-extension logic. Consequently, the invention benefits applications requiring high-density analog MAC operations, including matrix multiplication, neural network acceleration, and general-purpose array arithmetic, by offering efficient handling of signed multiplications while preserving the compactness and low power advantages of analog charge accumulation.

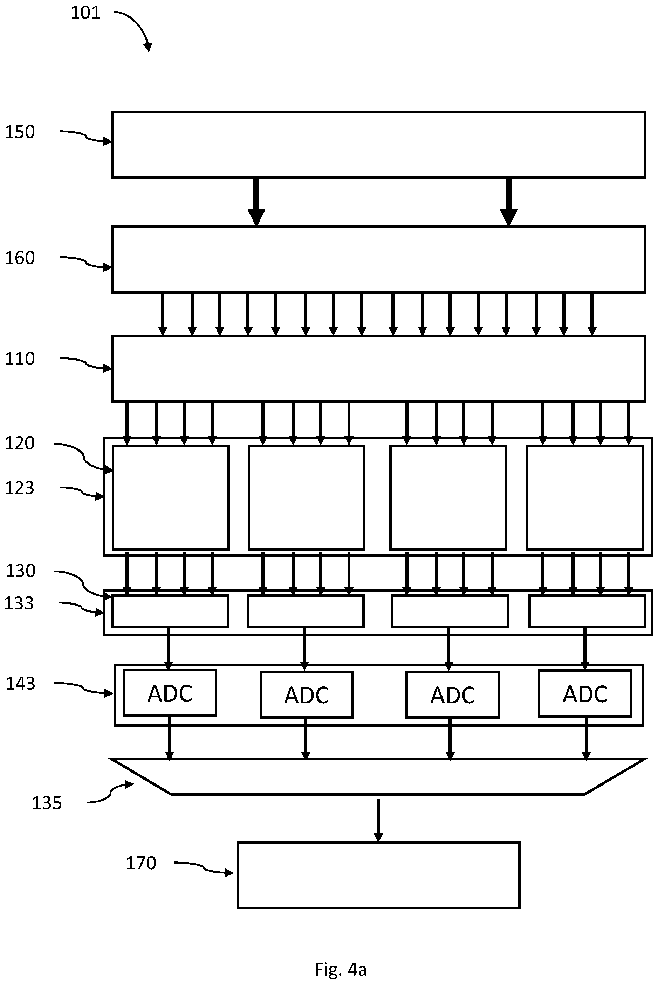

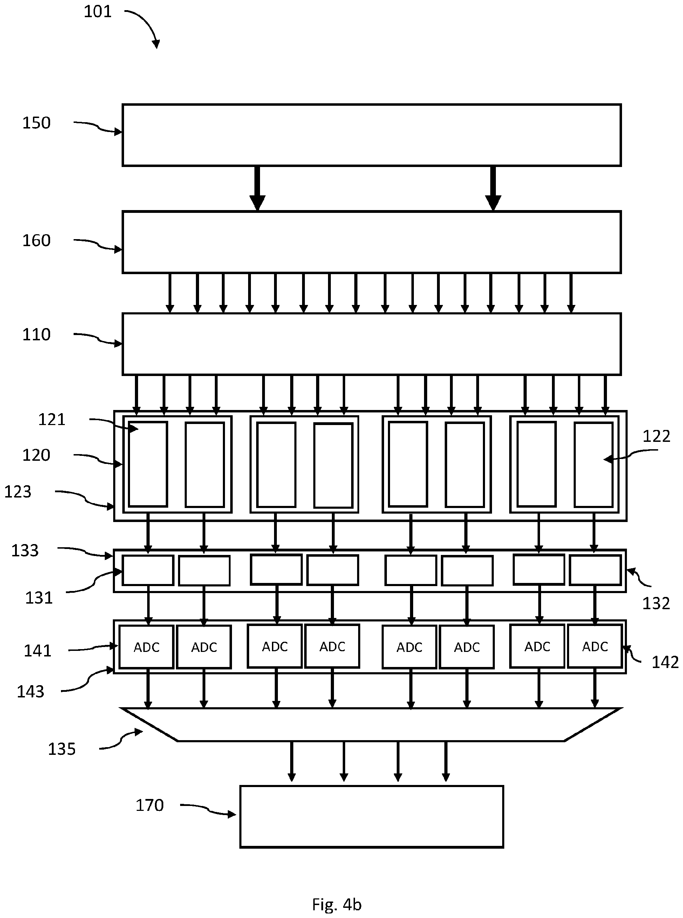

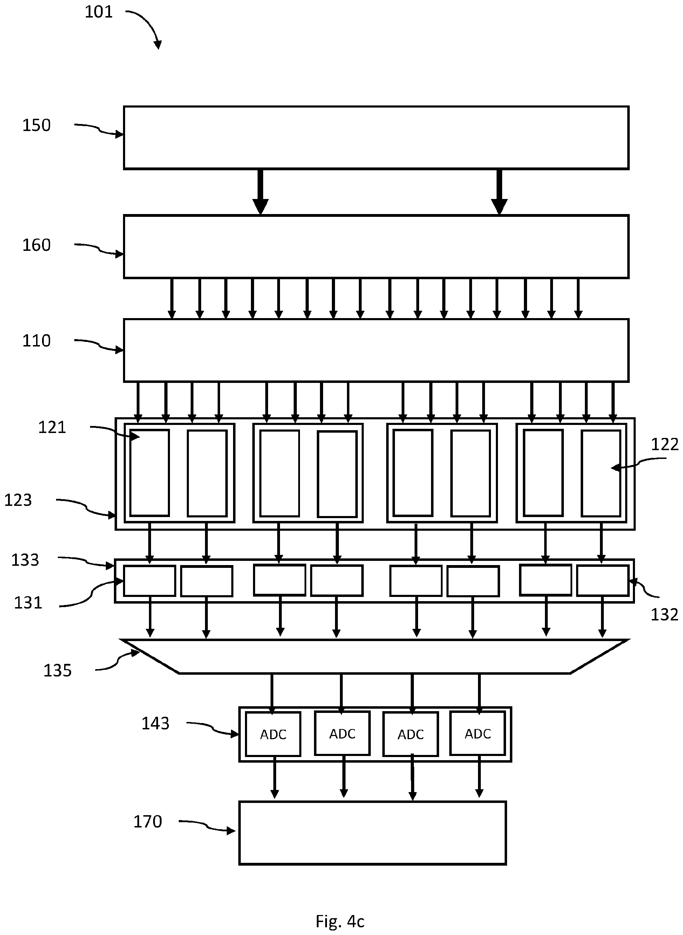

Reference is now made to Fig. 4a, Fig. 4b, and Fig. 4c, which schematically illustrates a block diagram of an array arithmetic operation device 101, according to some embodiments that include various components configured to carry out large-scale arithmetic operations, such as matrix multiplication, in an analog domain. Specifically, array arithmetic operation device 101 includes an input memory interface 150, a device allocation module 160, an MDAC module 110, an array of one or more CCD modules 123, an array of one or more common output modules 133, an array of one or more analog to digital converters 143, an array of one or more combining modules 135 and an output memory interface 170.

Fig 4a illustrates at the top level, incoming data (e.g., arrays, sub-arrays, vectors, or matrix segments) arrive from input memory interface 150, which retrieves operands from on-chip or external memory. Device allocation module 160 then distributes these input elements among one or more MDACs in MDAC module 110. The switching logic is designed to handle a broad range of input sizes and precision requirements, routing partial or complete sets of input data to the MDAC module 110 in an optimal fashion for parallel processing.

Each CCD module 120 in the array 123 is configured to receive multiple analog outputs from MDAC module 110. By including several such CCD modules 120 in parallel, the device can scale to handle a larger number of simultaneous multiply-and-accumulate operations, crucial for high-throughput applications like neural network inference or large matrix multiplication. In certain embodiments, each CCD module 120 is structured to perform the accumulation of analog charges, typically via intermediary rows and a terminal row, to produce partial sums without requiring intermediate digital conversions. Because multiple CCD modules 120 can operate in parallel, the overall throughput grows roughly proportionally to the number of CCD modules.

Downstream, the outputs of the CCD modules 120 (or array of one or more CCD modules 123) feed into respective common output modules 130 (or array of one or more common outputs 133). Each common output module 130 may function as an analog adder, buffer, or local summation stage for the CCD module 120 to which it is attached. By having a dedicated common output module 130 for each CCD module 120, the design can efficiently handle the aggregated analog signals from multiple parallel columns or rows of the CCD. In some embodiments, an array of one or more combining modules 135 merges or further processes the output signals from multiple common output modules 130, yielding a plurality of analog signals. The plurality of the analog signals then proceed to an array of analog to digital converter 143, where one or more high-speed and high-precision conversion step transforms the accumulated sums into digital form.

Finally, the converted digital results are conveyed to output memory interface 170 for storage or for immediate use by downstream processing units. By performing the multiplication and partial summation in the analog domain, device 101 can lower power consumption and reduce the amount of data shuttling across digital interfaces. This approach also allows for convenient scaling: system designers can adjust the number of CCD modules 120 in the array of one or more CCD modules 123, the parallelism of MDAC module 110, or the bandwidth of device allocation module 160, to meet specific performance and area constraints. In particular, as matrix sizes or neural network dimensions grow, additional CCD modules 120 may be instantiated to maintain real-time or near-real-time throughput.

Thus, Fig. 4a exemplifies a modular and scalable architecture wherein input memory interface 150 provides data to device allocation module 160, MDAC module 110 executes analog multiplication, an array of CCD modules 123 accumulates partial sums in parallel, an array of one or more common output modules 133 consolidate each local result, array of one or more ADCs 143 and array of one or more combining module 135 produce a final digitized output for storage via output memory interface 170. This integrated flow leverages the strengths of analog MAC arrays to efficiently address large-scale array arithmetic tasks.

Fig 4b depicts the same array arithmetic operation device 101 in Fig 4a, with the only difference that each of the CCD module 120 accommodates a positive 121 and negative CCD 122, the array of one or more common outputs 133 comprises the respective positive 131 and negative common output 132 and the array of one or more ADCs comprises the respective positive 141 and negative ADC 142. Thus, embodiment in Fig 4b depicts the device 101 in Fig 4a enabling arithmetic operation with negative values.

Turning to Fig 4c, the same array arithmetic operation device 101 in Fig 4b is depicted, the only difference that the plurality of the analog output provided by the array of one or more common outputs 133 are proceeded to the array of one or more combining modules 135 and the array of one or more ADCs 143 obtain the plurality of the combined analog output from the array of one or more combining modules 135.

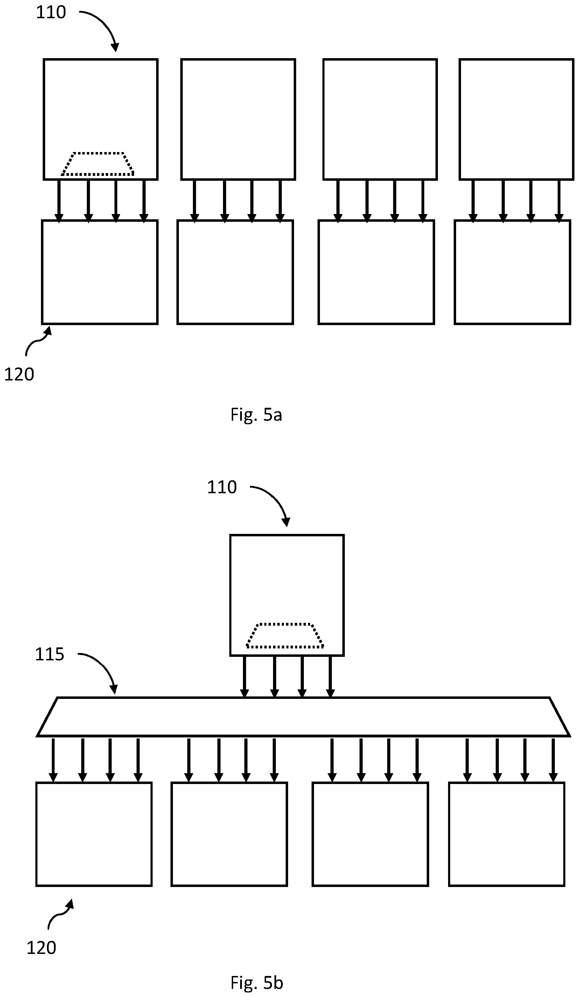

Reference is now made to Fig. 5a and 5b, which schematically illustrate block diagrams of different configurations of MDAC modules 110 and CCD modules 120, according to some embodiments. These configurations demonstrate different ways to distribute analog multiplication outputs across the CCD modules 120 for accumulation and summation.

In Fig. 5a, multiple instances of MDAC module 110 are each paired with a corresponding CCD module 120. For instance, each MDAC module 110 may contain one or more MDACs 112 that produce analog signals representing partial products of digital inputs. Those signals feed directly into a single CCD module 120, which accumulates and shifts the charges representing partial sums or partial products. By duplicating the MDAC-CCD pairing, the architecture can scale linearly with the number of parallel blocks. This arrangement is advantageous for high-throughput applications in which each MDAC module 110 simultaneously handles a partition (or tile) of the input array, and each CCD module 120 performs real-time accumulation of that partition's partial products. Consequently, expanding the overall system to handle larger arrays simply involves adding additional MDAC-CCD pairs, without altering the fundamental data flow.

Turning to Fig. 5b, a single MDAC module 110 feeds multiple CCD modules 120 via a device switching module 115. In this embodiment, MDAC module 110 may operate at a higher clock speed or in a time-multiplexed fashion, sending its analog outputs to different CCD modules 120 as scheduled by device switching module 115. Such a configuration can be beneficial when resource constraints, die area, or power limitations favor using fewer MDAC modules 110 while still driving a large number of CCD modules 120. By time-sharing the MDAC outputs through device switching module 115, the design can accommodate a large number of accumulation cells in parallel, which is particularly valuable for large-scale matrix or array computations that require substantial MAC operations. The device switching module 115 may incorporate routing logic, switches, or multiplexers to direct the MDAC outputs to selected CCD input rows at designated intervals.

In both configurations, each CCD module 120 accumulates the analog signals from one or more MDAC modules 110. This accumulation occurs in a compact analog domain, reducing the number of digital operations and minimizing overhead in large-scale multiply-and-accumulate processes. Thus, Figs. 5a and 5b showcase the flexibility and scalability of the disclosed architecture: by varying how MDAC modules 110 are distributed or shared among CCD modules 120, system designers can optimize performance, power consumption, and silicon area to match diverse computational requirements.

In Fig. 5a, the arrangement naturally supports a local batching approach, wherein each MDAC module 110 and its corresponding CCD module 120 process a subset of rows or columns from the input arrays independently. By assigning each batch of the input data (for instance, a block of matrix rows or columns) to a distinct MDAC-CCD pair, the local accumulation of partial sums is performed in a self-contained manner. This method scales well when the computation can be partitioned into multiple parallelizable batches, each processed by its own MDAC-CCD pairing.

Conversely, in Fig. 5b, the global batching approach is facilitated by device switching module 115, which routes data from the single MDAC module 110 to multiple CCD modules 120. Here, the entire set of input data may be divided into larger batches spanning multiple CCD modules 120. The MDAC module 110 operates in a time-multiplexed or round-robin sequence, injecting partial products into selected CCDs 120 based on a global batching scheme. This method is advantageous for scenarios where one high-performance MDAC module 110 can feed multiple CCD modules 120, potentially improving resource utilization and simplifying synchronization across the system.

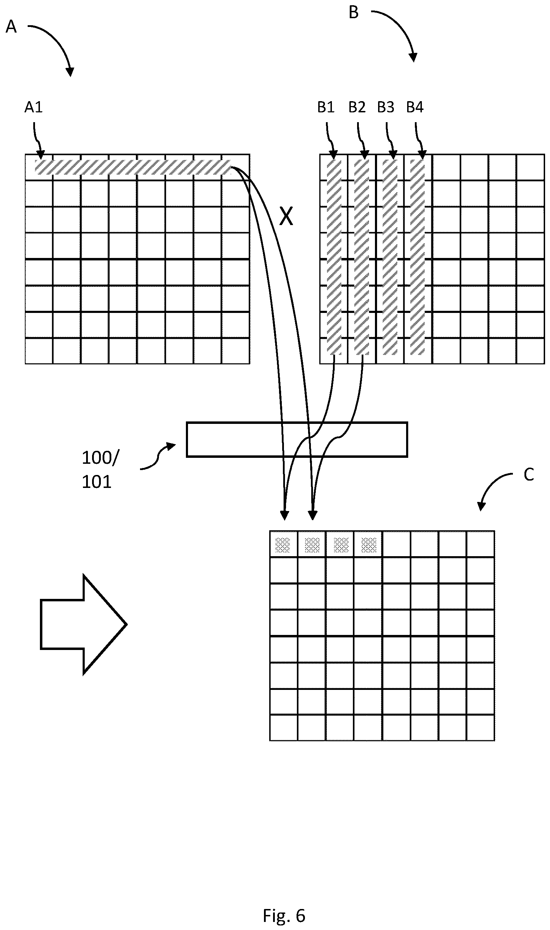

Reference is now made to Fig. 6, which schematically illustrates an example of array multiplication using an array operation circuitry block 100 or an array arithmetic operation device 101, according to some embodiments. In this particular example, matrix A includes a row A1, while matrix B includes columns B1, B2, B3, and B4, each representing a subset of its total columns. Matrix C is the resulting output array formed by multiplying matrix A with matrix B.

Notably, the dimension of row A1 in this example is similar to the number of total CCD inputs available in block 100 or device 101. This means that, for each operation, the entire row A1 can be supplied to the MDAC module 110 and subsequently distributed to the CCD module (120). Likewise, the columns B1 through B4 match the CCD's parallel input capacity. As a result, all partial products from the multiplication of row A1 with columns B1, B2, B3, and B4 can be generated and accumulated in a single pass.

In operation, the elements of row A1 and the elements of each column B1, B2, B3, and B4 are fed into the MDAC module, which converts the digital inputs into analog signals proportional to their products. These analog signals are then injected into the corresponding inputs of the CCD array. Because the array dimension exactly matches the total number of CCD inputs, the partial products for each pair are simultaneously processed and accumulated along the intermediary and terminal rows of the CCD, greatly reducing overhead.

Once the accumulation of partial products for that row-column combination is complete, the resulting analog sum is forwarded to a common output module and ultimately digitized by the analog to digital converter. The final output of the multiplication for row A1 and columns B1 to B4 is then written to the corresponding positions in matrix C. Consequently, the first 4 elements in the top row of matrix C become populated in the same cycle.

This approach can be particularly advantageous when the size of the input arrays directly aligns with the hardware's parallel capacity. By eliminating the need for iterative batching or complex scheduling logic, the design can achieve higher throughput and lower latency. Furthermore, matching the array dimension to the total CCD inputs simplifies control logic, and conserves power.

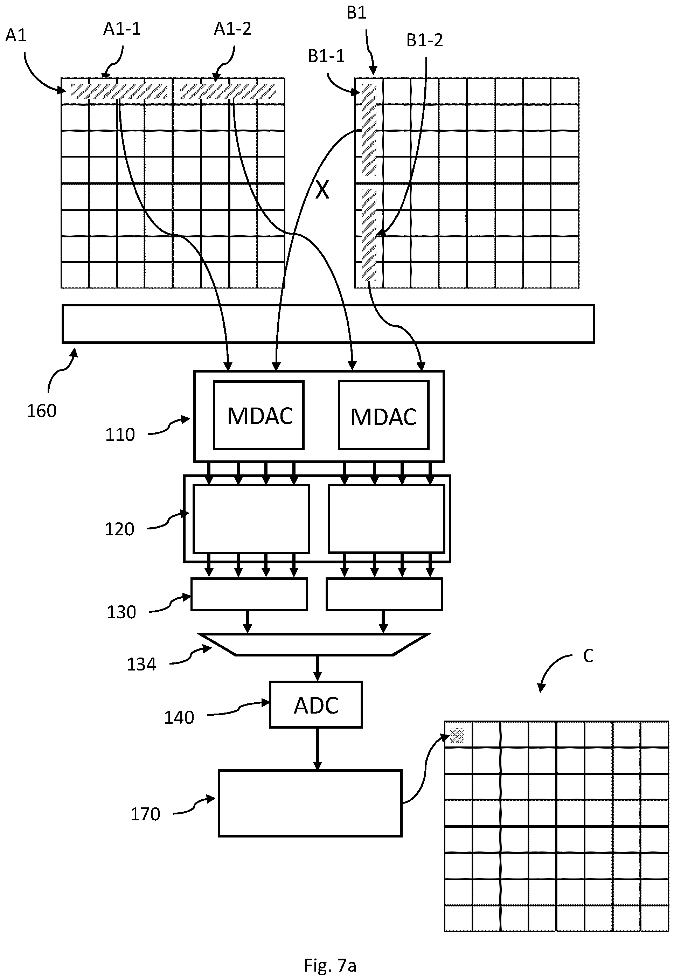

Reference is now made to Fig. 7a to Fig. 7c, which schematically illustrate an example of array multiplication using multiple MDAC modules 110 and CCD modules 120, coordinated by a device allocation module 160, according to some embodiments.

As used herein, the terms "CCD array" and "array of one or more CCD modules" are interchangeably used. As used herein, the terms "combining module array" and "array of one or more combining modules" are interchangeably used. As used herein, the terms "ADC array" and "array of one or more ADCs" are interchangeably used. As used herein, the terms "common output array" and "array of one or more common outputs" are interchangeably used.

Fig 7a shows an illustrated example of matrix A including two adjacent sub-rows labeled A1-1 and A1-2, while matrix B similarly includes sub-columns B1-1 and B1-2. Each sub-row or batch (e.g., A1-1, A1-2) and sub-column or batch (e.g., B1-1, B1-2) may constitute the matrix row A1 and matrix column B1. The device allocation module 160 allocates these sub-arrays to different MDAC modules 110 for parallel multiplication, thereby improving throughput and scalability.

During operation, sub-arrays A1-1 and B1-1 might be channeled to one MDAC module 110, while sub-array A1-2 and the corresponding array B1-2 are directed to another MDAC module 110. Each MDAC module 110 processes the assigned partial inputs, generating analog outputs proportional or corresponding to the partial products of those sub-arrays. The analog outputs of each MDAC module 110 then are provided to the respective CCD module 120, where they are accumulated and subsequently forwarded to the respective common output module 130.

By enabling separate batches of the input arrays to be routed to distinct MDAC modules 110, device allocation module 160 can orchestrate multiple multiply-and-accumulate (MAC) operations in parallel, accelerating the computation for an element or value of a large-scale matrix multiplication. Once the partial sums are formed in the CCD modules 120 in the CCD array 123, each common output module 130 delivers an analog local sum to the combining module 134. The resultant combined analog signal is digitized by the analog to digital converter 140, and finally, the output is stored or forwarded by the output memory interface 170 to build the resulting matrix C.

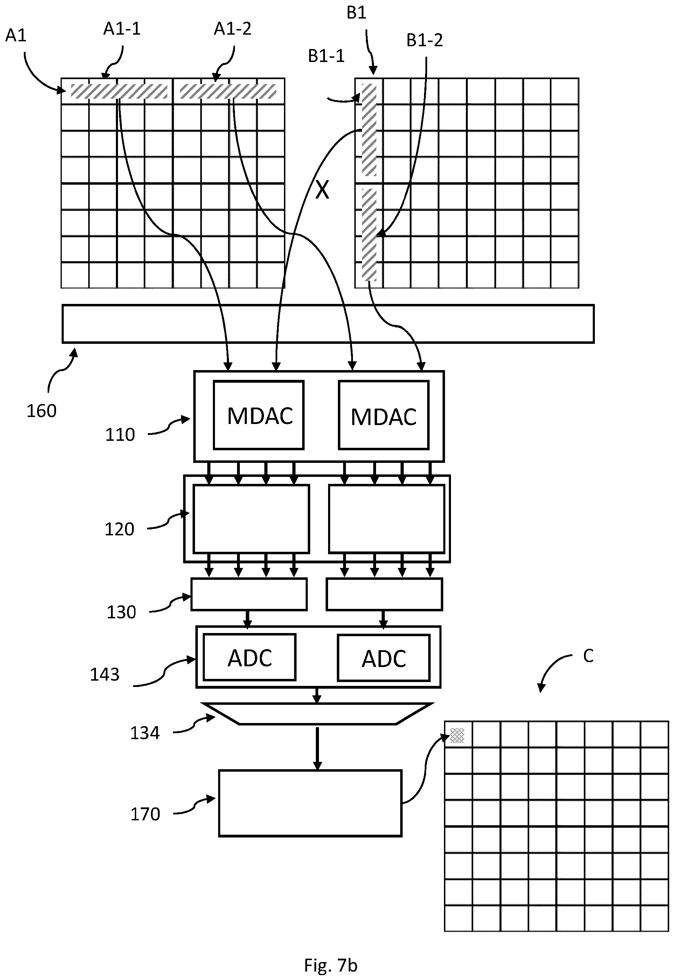

Fig. 7b depicts the same example as in Fig 7a, with the only difference that the plurality of the analog outputs provided by the common output array 133 are proceeded to the ADC array 143 and the combining module 134 obtains the plurality of the digital outputs from the ADC array 143.

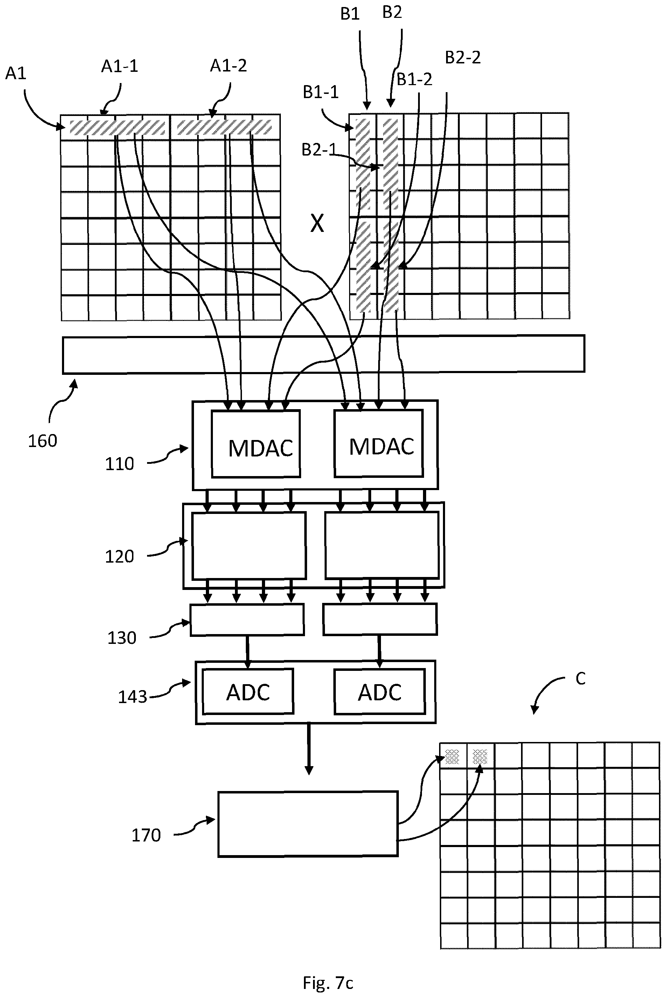

Fig. 7c displays an illustrated example of matrix A including two adjacent sub-rows labeled A1-1 and A1-2, while matrix B similarly includes sub-columns of two matrix columns B1 (B1-1 and B1-2) and B2 (B2-1 and B2-2). Each sub-row or batch (e.g., A1-1, A1-2) and sub-column or batch (e.g., B1-1, B1-2, B2-1, B2-2) may constitute the matrix row A and the matrix columns B1 and B2. The device allocation module 160 allocates these sub-arrays to different MDAC modules 110 for parallel multiplication, thereby improving throughput and scalability.

During operation, sub-arrays A1-1 and B1-1 might be channeled to one MDAC module 110, while sub-array A1-1 and the corresponding array B2-1 are directed to another MDAC module 110. Each MDAC module 110 processes the assigned partial inputs, generating analog outputs proportional or corresponding to the partial products of those sub-arrays. The analog outputs of each MDAC module 110 then are provided to the respective CCD module 120, and then shifted through the intermediary rows toward the terminal row, where the partial products are held. Sub-arrays A1-2 and B1-2 might be channeled to one MDAC module 110, while sub-array A1-2 and the corresponding array B2-2 are directed to another MDAC module 110. As in the step before each MDAC module 110 processes the assigned partial inputs, generating analog outputs proportional or corresponding to the partial products of those sub-arrays. The analog outputs of each MDAC module 110 then are provided to the respective CCD module 120, then shifted through the intermediary rows towards the terminal row, where the partial products are accumulated with the preceding products to a plurality of partial sums provided to respective common outputs constituting the local sums, which are provided to an ADC array. The digitized results are finally forwarded by the output memory interface 170 to build the resulting matrix C.

By enabling partial sum accumulation multiple numbers of elements of the Matrix C corresponding to the number of CCD modules can be calculated concurrently, thus this example may refer to a 2-size tiling.

These configurations leverage the flexibility of having multiple MDAC modules 110 and CCD modules 120 in the same system, allowing different segments of the input matrices to be processed concurrently. As a result, partial products from A1 and B1, B2 are calculated in parallel, significantly reducing the time required for large matrix multiplications. In some embodiments, the allocation network (device allocation module 160) may adaptively reassign sub-arrays to whichever MDAC modules 110 is available, optimizing resource usage for diverse workloads. Moreover, the CCD modules may accommodate positive and negative CCDs to operate with negative values prompting the use of a combining module array for analog or digital signal combination or arithmetic operation (e.g. merging, subtracting, etc.).

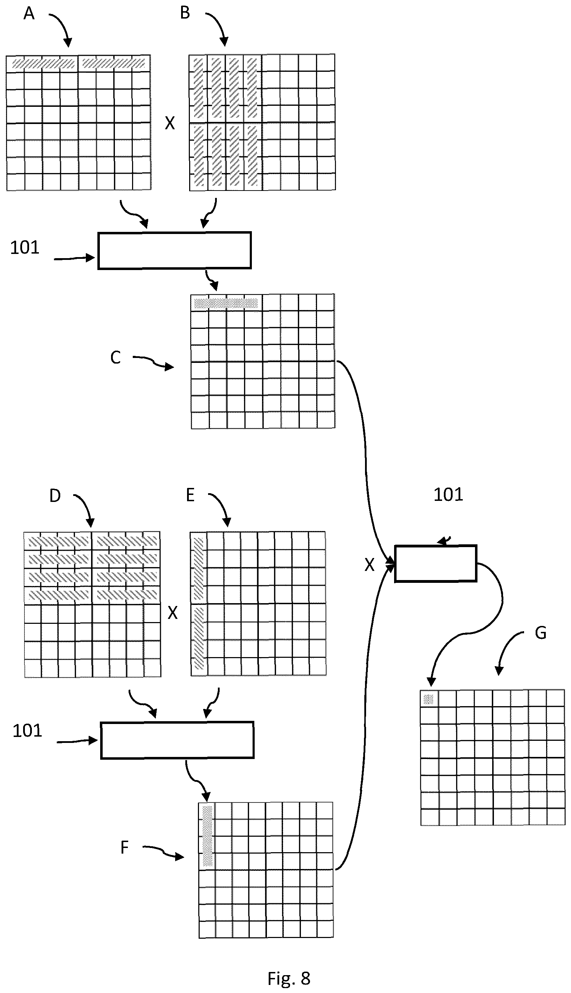

Reference is now made to Fig. 8, which schematically illustrates a multi-stage array operation involving the forwarding of intermediate results for subsequent processing, according to some embodiments. The figure depicts multiple matrices A, B, D, and E, each containing different sub-arrays or batches. An array arithmetic operation device 101 is used at several points in the same instance or under different instances thereof in the process to generate partial or final outputs, including matrices C, F, and ultimately G.

In one illustrative sequence, matrices A and B are first multiplied by an array arithmetic operation device 101 to produce an output matrix C. Within device 101, the elements of A and B are mapped to MDAC modules and thereafter to CCD modules, where partial products are accumulated in the analog domain. The final analog sum from each row-column product is digitized by an analog to digital converter 140 and routed through an output memory interface 170 to form matrix C.

Instead of treating matrix C merely as a final result, the system forwards the partial results of C as an intermediate output-either stored in memory or retained in an on-chip buffer-for subsequent multiplication with other arrays. For instance, matrices D and E can undergo a similar multiply-and-accumulate process in device 101, resulting in a new output matrix F. This two-stage computation demonstrates how partial (or intermediate) outputs from earlier multiplications (such as C, F, or selected sub-blocks thereof) may be fed into another device 101 for further arithmetic operations.

By chaining these operations, the multiplication between matrix C and matrix F can be commended, once more using array arithmetic operation device 101, to produce a final output array G. Notably, the ability to forward intermediate results in digital form (e.g., C or F) or, in some embodiments, even partial sums within the device 101, significantly enhances computational throughput. Rather than redundantly recalculating or reloading repeated elements, the system uses the intermediate data to perform the next layer of multiplication or accumulation.

Such multi-stage workflows are advantageous in large-scale neural network processing and other high-dimensional numeric computations. By structuring the flow of partial results through array arithmetic operation devices 101, designers can build a pipeline that executes multiple multiply-and-accumulate phases in succession, each leveraging the analog efficiency of the MDAC-CCD architecture and consolidating only at final stages with a single analog-to-digital conversion per partial sum. Thus, Fig. 8 exemplifies how intermediate results (e.g., C, F) are forwarded for subsequent operations, permitting the expansion of the overall arithmetic pipeline to accommodate multi-layer or multi-phase tasks.

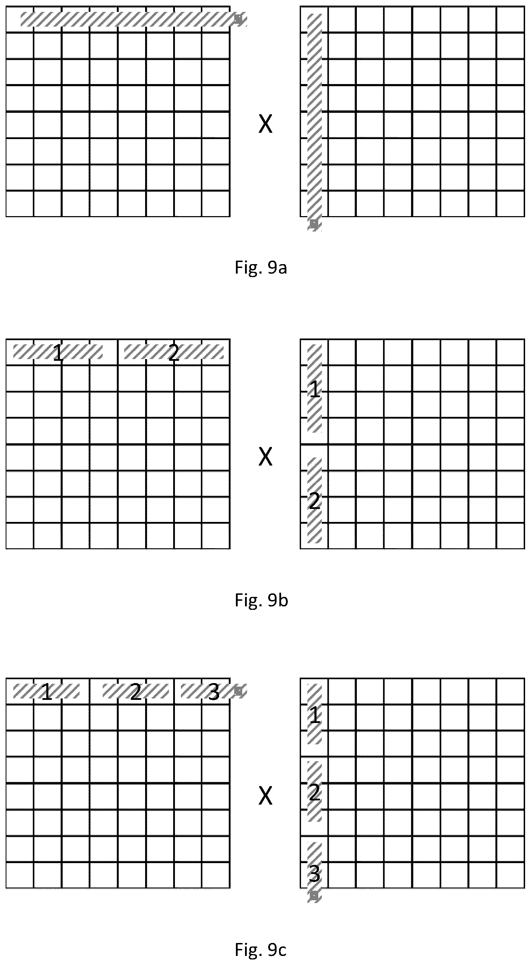

Reference is now made to Fig. 9a, 9b, and 9c, which schematically illustrate array multiplication schemes, according to some embodiments.

Figs. 9a, 9b, and 9c illustrate how the available parallel inputs of CCD module 120 can be utilized when performing array multiplication with varying array dimensions.

In Fig. 9a, the number of parallel CCD inputs exceeds the dimension of the input arrays. As a result, only a fraction of the available input nodes in parallel input row 124 are actually used at any given time. For example, if CCD module 120 accommodates 64 parallel inputs but the array dimension is only 32, the extra 32 input positions remain idle or unpopulated. This scenario leads to partial utilization of the hardware resources, which still performs the multiplication correctly but does not fully exploit the parallel capacity of CCD module 120. Such an arrangement may be desirable if the design must accommodate various array sizes, some of which may not match the hardware's maximum width.

In Fig. 9b, the number of parallel CCD inputs matches either exactly half or some other factor (complete divisor) of the input array's dimension. Here, the parallel input row 124 lines up with the array dimension in a way that allows full utilization of each CCD input node. For instance, if CCD module 120 has 32 parallel inputs and the array dimension is 64, a batching mechanism can process the first 32 elements in the first pass and the remaining 32 elements in the second pass, with no unused inputs in each batch. This configuration yields efficient throughput since each parallel input is actively engaged during operation and the tiling procedure cleanly divides the array.

Lastly, Fig. 9c depicts a scenario where the number of parallel CCD inputs is not a complete divisor of the array dimension. In this case, batching is still employed to segment the array into multiple batches, but the final batch may only partially use the parallel inputs. For example, if CCD module 120 offers 30 parallel inputs and the array dimension is 32, the system would fully load each of the 30 inputs for the initial portion of the multiplication but would have a remainder of only 2 elements to process in the last batch. This leads to a slight under-utilization of the hardware in that final pass. Despite not achieving perfect alignment, the tiling mechanism ensures all partial products are computed by scheduling multiple passes, thereby retaining the parallel acceleration for most of the computations while still accommodating arbitrary array dimensions.

The presented example displayed in Fig. 9a to Fig. 9c may preferably executed with an array operation circuitry block 100 and an array arithmetic operation device 101. However, using an array arithmetic operation device 101 enables tiling by calculating different elements of the resulting matrix concurrently while the number of the CCD modules in an array of CCDs corresponds to the number of the calculated elements and the tile size (i.e. if the array of CCDs includes 16 CCD modules, 16 elements of the resulting matrix may be concurrently calculated constituting a tile of 16 elements in the resulting matrix).

Unless specifically stated otherwise, as apparent from the following discussions, it is appreciated that throughout the specification discussions utilizing terms such as "processing", "computing", "calculating", "determining", "estimating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices. In addition, the term "plurality" may be used throughout the specification to describe two or more components, devices, elements, parameters and the like.

Embodiments of the present disclosure may include apparatuses for performing the operations herein. This apparatus may be specially constructed for the desired purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system.

The disclosure may be described in the general context of computer-executable instructions, such as program modules, being executed by a computer. Generally, program modules include routines, programs, objects, components, data structures, and so forth, which perform particular tasks or implement particular abstract data types. The disclosure may also be practiced in distributed computing environments where tasks are performed by remote processing devices that are linked through a communications network. In a distributed computing environment, program modules may be located in both local and remote computer storage media including memory storage devices.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" or "comprising," when used in this specification, specify the presence of stated features, integers, steps, operations, elements, or components, but do not preclude or rule out the presence or addition of one or more other features, integers, steps, operations, elements, components, or groups thereof.

While a number of exemplary aspects and embodiments have been discussed above, those of skill in the art will recognize certain modifications, additions and sub-combinations thereof. It is therefore intended that the following appended claims and claims hereafter introduced be interpreted to include all such modifications, additions and sub-combinations as are within their scope.

### Reference Signs

- 100: multiplication circuitry block, array operation circuitry block
- 101: array arithmetic operation device
- 110: MDAC module
- 112: MDAC
- 114: block switching module / MDAC switching module
- 115: device switching module
- 120: CCD module
- 121: positive CCD
- 122: negative CCD
- 123: array of one or more CCD modules
- 124: parallel input row
- 126: intermediary rows
- 126a, 126b: an intermediary row
- 126: parallel terminal row
- 130: common output module
- 131: positive common output module
- 132: negative common output module
- 133: array of one or more common output modules
- 134: combining module
- 135: an array of one or more combining modules
- 140: analog to digital converter / ADC
- 141: positive ADC
- 142: negative ADC
- 143: array of one or more ADCs
- 150: input memory interface
- 160: device allocation module
- 170: output memory interface
- 201a, 201b: first input pair
- 202a, 202b: second input pair
- 203a, 203b: third input pair
- 204a, 204b: fourth input pair
- A, B, C, D, E, F G: Array

## Claims

1. An array operation circuitry block (100) comprising:
a multiplying digital to analog converter, MDAC, module (110) comprising one or more MDACs (112), each of the MDACs is configured to obtain two digital inputs and
provides an analog output corresponding to a multiplication result of the two digital inputs, and the MDAC module is configured to obtain a plurality of pairs of two digital inputs and provide a plurality of analog outputs corresponding to multiplication values of a plurality of pairs,
a charge coupled device, CCD, module (120) comprising one or more CCD (121, 122), each CCD comprising:
a parallel input row (124) configured to obtain the analog outputs from the MDAC module, wherein the number of inputs in the parallel input row corresponds to the number of analog outputs from the MDAC module,
one or more intermediary rows (126, 126a, 126b), wherein the CCD is configured to propagate the analog inputs along the intermediary rows of the CCD for performing an addition operation of propagated analog inputs, and
a parallel terminal row (128) configured to accumulate propagated signals from the preceding intermediary rows and provide parallel analog outputs indicative of an accumulation of the propagated signals from the preceding intermediary rows, and
a common output module (130) configured to obtain the parallel analog outputs from the parallel terminal row and perform an addition operation on the obtained parallel analog outputs and provide an output analog signal indicative of the addition calculation of all the parallel analog outputs from the parallel terminal row.

2. The block of claim 1, wherein the MDAC module comprises either:
a number of MDACs equal to the number of inputs in the parallel input row, such that each MDAC is associated with one input in the parallel input row, or
a number of MDACs smaller than the number of inputs in the parallel input row and a block switching module configured to selectively associate one or more of the MDACs to one or more of the inputs in the parallel input row.

3. The block of claims 1 or 2, further comprising an analog to digital converter (140) configured to obtain from the common output module the analog output signal, indicative of the addition calculation of all the parallel analog outputs from the parallel terminal row, and convert it to a digital output signal.

4. The block of claim 3, further comprising an output memory interface module (170) configured to receive the digital output signal from the analog to digital converter and allocate the digital output signal to a memory element.

5. The block of any of claims 1 to 4, wherein the CCD module comprises a positive CCD (121) configured to perform operations corresponding to positive products and a negative CCD (122) configured to perform operations corresponding to negative products, and
wherein the block further comprises a combining module (134) configured to generate a combined output based on an output of the positive CCD and/or an output of the negative CCD,
preferably, wherein the block further comprises a block switching module (114) configured to route analog outputs of the MDACs to different CCDs, particularly either the positive CCD or the negative CCD based on sign values of the two digital inputs.

6. The block of claim 5,
wherein the combining module comprises an analog circuitry configured to obtain an analog output of the positive CCD, and an analog output of the negative CCD and provide to the analog to digital converter an analog signal obtained by combining the analog output of the positive CCD and the analog output of the negative CCD, or
wherein the analog to digital converter comprises a positive analog to digital converter configured to obtain the analog output of the positive CCD and convert it to a positive digital output of the positive CCD and a negative analog to digital converter configured to obtain the analog output of the negative CCD and convert it to a negative digital output of the negative CCD, and wherein the combining module comprises a digital arithmetic logic module configured to combine the positive digital output and the negative digital output.

7. The block of any of claims 1 to 6, wherein the parallel terminal row is configured to accumulate propagated signals by collecting and storing charges obtained from preceding intermediary rows.

8. The block of any of claims 1 to 7, further comprising a block allocation module configured to obtain two input arrays, A and B, wherein the number of elements in an array dimension of A corresponds to the number of elements in an array dimension of B, and to provide pairs or elements comprising one element from A and one element of B to the MDAC module.

9. The block of claim 8, wherein, when the number of elements in an array dimension of A or B is larger than the number of input pairs in the MDAC module, the block allocation module is configured to provide batches of pairs to the MDAC module corresponding to the number of pairs of inputs in the MDAC module, and the terminal row of the CCD module is configured to accumulate one or more products of multiplying pairs corresponding to the number of batches of pairs provided to the MDAC module.

10. An array arithmetic operation device (101) comprising:
a multiplying digital to analog converter, MDAC, module (110) comprising one or more MDACs (112), each of the MDACs is configured to obtain two digital inputs and provides an analog output corresponding to a multiplication result of the two digital inputs, and the MDAC module is configured to obtain a plurality of pairs of two digital inputs and provide a plurality of analog outputs corresponding to multiplication values of a plurality of pairs,
an array of one or more charge coupled device modules, CCD modules, (123) wherein each CCD module (120) comprises one or more CCDs (121, 122), each CCD comprising:
a parallel input row (124) configured to obtain a plurality of analog outputs from the MDAC module,
one or more intermediary rows (126, 126a, 126b), wherein the CCD is configured to propagate the analog inputs along the intermediary rows of the CCD for performing an addition operation of propagated analog inputs,
a parallel terminal row (128) configured to accumulate propagated signals from the preceding intermediary rows and provide parallel analog outputs indicative of an accumulation of the propagated signals from the preceding intermediary rows, and
an array of one or more common output modules (133) configured to obtain a plurality of parallel analog outputs from parallel terminal rows in the array of one or more CCD modules and provide a plurality of analog signal outputs each indicative of the addition calculation on the obtained parallel analog output of the respective terminal row of one common output.

11. The device of claim 10, wherein the MDAC module comprises either:
a number of MDACs equal to total number of inputs in the parallel input row of the array, such that each MDAC is associated with one input in the parallel input row of the array, or
a number of MDACs smaller than the total number of inputs in the parallel input row of the array and a block switching module configured to selectively associate one or more of the MDACs to one or more of the inputs in the parallel input row of the array of one or more of the CCDs in the CCD module.

12. The device of claims 10 or 11, further comprising:
an input memory interface (150) configured to obtain from a memory a set of input arrays for performing array arithmetic operations, and to provide the set of arrays to the MDAC module, in which each MDAC obtains element values from two arrays from the set of input arrays, and
an output memory interface (170) configured to obtain digital outputs from the array of one or more ADCs and arrange them as an output array.

13. The device of claim 12, further comprises a device allocation module (160) configured to obtain data from a set of input arrays from the input memory interface in one or more batches and allocates the batches to the MDAC module for performing arithmetic array operation between two input arrays.

14. The device of claim 13, wherein the device allocation module is configured to determine a size of each of the batches based on a dimension of the first input array and the second input array, the number of pairs of inputs in the MDAC module, or the number of columns in CCDs of the blocks, and
optionally, the device further comprises a device switching module (115) configured to obtain analog outputs from the MDAC module and controllably provide the analog outputs to CCD modules within the array of one or more CCD modules.

15. The device of any of claims 12 to 14, wherein the output interface is configured to forward intermediary results of the arithmetic array of the first input array and the second input array to a processing circuitry configured to perform an arithmetic operation using the product of the first input array and the second input array.
